# EUROPEAN PATENT SPECIFICATION

(11) **EP 1 647 457 B1**
(45) Date of publication and mention of the grant of the patent: **12.12.2007**
(21) Application number: 05022135.7
(22) Date of filing: 11.10.2005
(51) Int. Cl.: B60R 25/02

(54) **Steering lock apparatus**
Lenksperre
Verrou de direction

(30) Priority: 14.10.2004 JP 2004300231
(43) Date of publication of application: 19.04.2006
(73) Proprietor: Mazda Motor Corporation, Aki-gun, Hiroshima 730-8670 (JP)
(72) Inventor: Tanimoto, Tomohiro, Aki-gun Hiroshima 730-8670 (JP)
(74) Representative: Müller-Boré & Partner Patentanwälte

(56) References cited:
- CH-A- 551 304
- DE-A1- 19 733 249
- GB-A- 392 970
- US-A- 3 985 009
- US-B1- 6 351 206

## Description

The present invention relates to a steering lock apparatus for selectively locking and unlocking a steering shaft of a vehicle

Heretofore, there has been known a steering lock apparatus for use in a vehicle, which comprises a key cylinder adapted to be rotatably operated by an occupant, a steering lock mechanism adapted to selectively lock and unlock a steering shaft extending in an approximately frontward and rearward direction of the vehicle, in conjunction with the operation of the key cylinder, and an ignition switch mechanism adapted to selectively turn on and off an ignition switch in conjunction with the operation of the key cylinder, wherein the key cylinder, the steering lock mechanism and the ignition switch mechanism are housed in a cylindrical-shaped casing in this order along an axial direction of the casing (see, for example, Japanese Patent Laid-Open Publication Nos. 09-112099, 2001-278009 and 2002-138729).

In view of the steering shaft functionally required to reliably transmit a movement of a steering wheel operated by a driver to a steering mechanism, a steering lock apparatus cannot be arranged in a manner causing segmentalization of the steering shaft. Thus, most of conventional steering lock apparatuses having the above structure are disposed above or below a steering shaft extending in an approximately frontward and rearward direction of a vehicle, in such a manner as to intersect with the steering shaft in top plan view.

In the conventional steering lock apparatus, the steering lock mechanism is typically housed in an longitudinally intermediate portion of the casing located adjacent to the steering shaft, and provided with an engagement member which is designed to be protruded and retracted relative to the steering shaft and engaged and disengaged with and from the steering shaft, in conjunction with a rotational movement of the key cylinder, so as to selectively restrict and permit a rotating operation of the steering shaft. Further, the ignition switch mechanism is housed in a distal end portion of the casing in such a manner as to be coaxially aligned with the key cylinder and the steering lock mechanism. This arrangement is intended to utilize a rotational movement of the key cylinder housed in a proximal end portion of the casing, as a control source of the ignition switch, so as to provide a simplified structure.

In most of vehicles, a steering shaft is disposed to extend in an approximately frontward and rearward direction of a vehicle, and a steering wheel to be operated by an occupant is attached to a rear end of the steering shaft. In a layout design intended to arrange various meters in an instrument panel in such a manner as to allow a driver to check the meters through the inside of a steering wheel rim, the meters have to be disposed above and close to the steering shaft to provide enhanced visibility of the meters. In this case, if the steering lock apparatus is disposed above the steering shaft, the meters will be disposed further above the steering lock apparatus. This makes it difficult to arrange the meters at a position close to the steering shaft, resulting in deteriorated visibility due to interference of the steering shaft.

If the steering lock apparatus is otherwise disposed below the steering shaft, the knee or the like of an occupant is likely to come into contact with the steering lock apparatus in the event of a vehicle collision or the like. This causes a problem about increase in cost due to measures for ensuring an adequate occupant protection performance.

DE 197 33 249 A1 discloses a steering wheel locking device for an automotive vehicle comprising a locking member which may be moved into a locking position when the vehicle is stopped.

US 6 351 206 B1 discloses an antitheft protection system for a motor vehicle comprising an ignition lock which includes an energy coil and an IR receiver, so that, when the ignition key is inserted, the energy coil and the IR receiver of the ignition lock are aligned with an energy coil and an IR transmitter of the ignition key.

US 3 985 009 discloses a compact anti-theft device for vehicles comprising a cylindrical lock and a rotary electrical switch, the axes thereof are disposed at angles to each other and a driving connection is made by gears.

CH 551 304 discloses a steering lock device comprising a locking cylinder and an ignition switch disposed transversely with respect to an axis of the locking cylinder. The ignition switch is drivingly connected with the locking cylinder via a bevel drive gear.

GB 392 970 discloses a lock comprising a fixed member and a rotatable member disposed coaxially to the fixed member and a bolt movable in an axial direction.

It is the object of the invention to provide a steering lock apparatus which has an improved arrangement to take measures for ensuring an adequate occupant protection performance while suppressing increase in costs.

This object is fulfilled by a steering lock apparatus having the features disclosed in claim 1. Preferred embodiments are defined in the dependent claims.

According to an aspect of the present invention, a steering lock apparatus is provided with a key cylinder adapted to be rotated by a key, a steering lock mechanism adapted to selectively lock and unlock a steering shaft extending in an approximately frontward and rearward direction of a vehicle, in conjunction with the rotation of the key cylinder, an ignition switch mechanism adapted to selectively turn on and off an ignition switch in conjunction with the rotation of the key cylinder, and a casing for housing therein the key cylinder, the steering lock mechanism and the ignition switch mechanism.

The casing for housing therein the key cylinder, the steering lock mechanism and the ignition switch mechanism is disposed on one of opposite lateral sides of the steering shaft, and has a bent portion at an intermediate portion thereof. The key cylinder and the ignition switch mechanism are disposed, respectively, on opposite sides of the bent portion while interposing the bent portion therebetween. The bent portion houses therein a rotation-transmitting mechanism for changing a transmission direction of the rotation of the key cylinder from an axial direction of the key cylinder to a given direction allowing the rotation of the key cylinder to be transmitted to the ignition switch mechanism.

These and other objects, features, aspects, and advantages of the present invention will become more apparent from the following detailed description of the preferred embodiments/examples with reference to the accompanying drawings, in which:.
FIG 1 is a sectional view showing the structure of a steering lock apparatus according to a first embodiment of the present invention;
FIGS. 2A and 2B are perspective views showing one illustrative structure of a steering lock mechanism in the steering lock apparatus according to the first embodiment;
FIG. 3 is an exploded perspective view showing a fixing structure to a steering shaft housing in the steering lock apparatus according to the first embodiment;
FIG. 4 is an exploded perspective view showing a steering lock apparatus according to a second embodiment of the present invention, wherein a combination-switch-unit mounting portion is formed in an anchor portion; and
FIG 5 is an exploded perspective view showing a steering lock apparatus according to a third embodiment of the present invention, wherein a keyless lock unit is mounted thereon.

With reference to the drawings, a preferred embodiment of the present invention will now be described in detail.

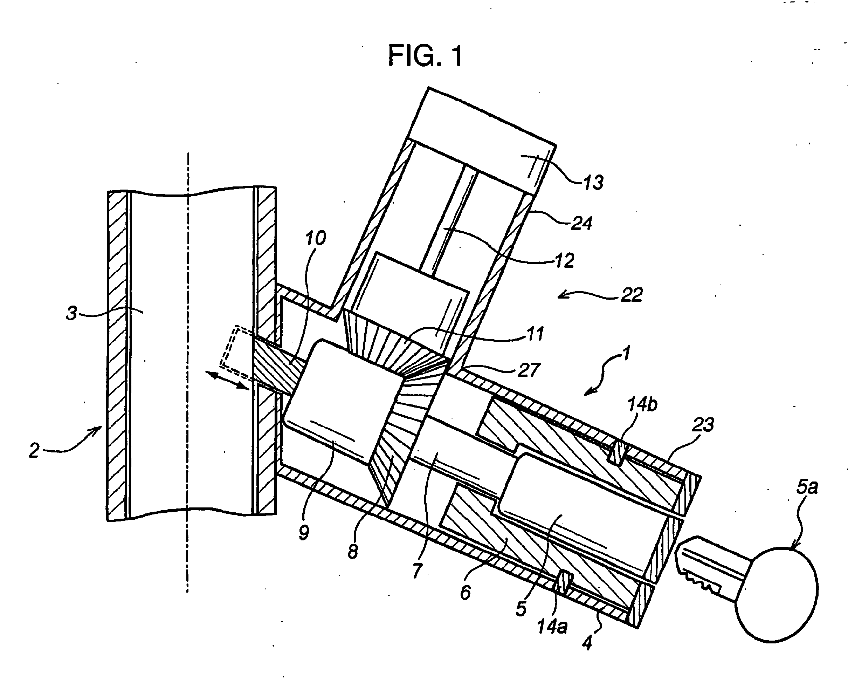

FIG. 1 is a sectional view showing the structure of a steering lock apparatus according to a first embodiment of the present invention, wherein upward and downward directions in the figure correspond, respectively, to frontward and rearward directions of a vehicle.

In FIG. 1, the reference numeral 1 indicates a steering lock apparatus, and the reference numeral 2 indicates a steering shaft housing internally supporting a steering shaft 3 extending in an approximately frontward and rearward direction of a vehicle, in a rotatably manner. A steering wheel (not shown) is attached to a rear (lower side of the figure) end of the steering shaft 3. The reference numeral 5 is a mechanical key owned by a user and used for operating the steering lock apparatus 1.

Differently from the conventional steering lock apparatus, the steering lock apparatus 1 is disposed approximately on one of opposite lateral sides (e.g. on the right side in FIG. 1) of the steering shaft 3 without intersecting with the steering shaft 3.

If the conventional steering lock apparatus is disposed on one of opposite lateral sides of the steering shaft 3 without modifications, any function of the steering lock apparatus cannot be achieved. That is, such an arrangement is impractical. Because a cylindrical-shaped casing of the conventional steering lock apparatus typically has a proximal end portion housing therein a key cylinder adapted to be rotated by a key, a distal end portion housing therein an ignition switch mechanism adapted to be operated in conjunction with the rotation of the key cylinder, and an intermediate portion located between the key cylinder and ignition switch mechanism and along an axial direction of the casing to house therein a steering lock mechanism adapted to be operated in conjunction with the rotation of the key cylinder, whereby the conventional steering lock apparatus can fulfill intended functions only if it is arranged in such a manner as to intersect with the steering shaft in top plan view.

In contrast, the steering lock apparatus 1 according to this embodiment employs a distinctive structure including a casing 4 having an intermediate portion which is bent at an approximately right angle and form as a bent portion. Thus, the steering lock apparatus 1 can be disposed on one of opposite lateral sides of the steering shaft 3 in a highly practicable manner.

In this embodiment, the proximal end portion of the casing 4 is disposed to have an axis slightly inclined rearward with respect to a width or lateral direction of the vehicle, and the distal end portion of the casing 4 located across the bent portion is disposed to extend frontward or in the frontward direction of the vehicle. That is, the bent portion is bent frontward or in the frontward direction of the vehicle. In other words, the bent portion is bent in a direction other than a downward direction relative to the steering shaft. Thus, the risk of interference between an ignition switch mechanism 13 and the knee of an occupant can be eliminated. Further, the bent portion is bent in a direction other than an upward direction relative to the steering shaft, so that meters in an instrument panel can be disposed close to the steering shaft without the risk of interference between the ignition switch mechanism 13 and the meters, to maintain adequate visibility of the meters. In addition, the ignition switch mechanism 13 is oriented in a frontward direction which is equal to a direction for connecting wirings thereof with an in-vehicle battery and other associated in-vehicle electric components. Thus, the ignition switch mechanism 13 can be disposed closer to the in-vehicle battery and other associated in-vehicle electric components to facilitate reduction in length of the wirings.

Each component of the steering lock apparatus 1 is housed in the casing 4 prepared, for example, by bending a longitudinally intermediate portion of a cylindrical-shaped steel pipe. Specifically, the casing 4 houses therein a key cylinder 5 adapted to be rotated by the key 5a, a steering lock mechanism adapted to selectively lock and unlock the steering shaft 3, and the ignition switch mechanism 13 adapted to selectively turn on and off an ignition switch (not shown) in conjunction with the rotation of the key cylinder 5.

The casing 4 has a main body 22 housing the components of the steering lock apparatus 1, and an anchor portion 20 for mounting the main body 22 to the steering shaft housing 2. The main body 22 and the anchor portion 20 are integrally formed in a single piece using a steel material. The main body 22 has a proximal end portion housing the key cylinder 5 therein, a distal end portion 24 housing the ignition switch mechanism 13 therein, and the bent portion 27 located between the proximal and distal end portions and bent at an approximately right angle. The bent portion 27 or intermediate portion of the casing 4 houses therein the steering lock mechanism and an after-mentioned rotation-transmitting mechanism. The material of the casing 4 is not limited to steel, but may be any other suitable material, such as other iron materials or hard synthetic resin materials.

More specifically, the key cylinder 5 is housed in the proximal end portion 23 of the casing 4 (main body 22) in such a manner as to be supported by an outer cylinder 6. The outer cylinder 6 is designed to rotatably support the key cylinder 5, and fixedly retained by pins 14a, 14b.

The intermediate portion formed as the bent portion 27 houses therein a first connection rod 7 having one end connected to the key cylinder 5 in such a manner as to be rotated together with the key cylinder 5, a cam 9 fixed to the other end of the first connection rod 7 coaxially therewith in such a manner as to be driven by the first connection rod 7, and a lock member 10 adapted to be selectively engaged and disengaged with and from a concave portion formed in the steering shaft 3 through a through-hole of the steering shaft housing 2, in conjunction with a movement of the cam 9 so as to selectively lock and unlock the steering shaft 3. The combination of the first connection rod 7, the cam 9 and the lock member 10 serves as the steering lock mechanism. A specific structure of the steering lock mechanism will be described later in connection with an operation for locking and unlocking the steering shaft 3.

The ignition switch mechanism 13 is housed in the distal end portion 24 of the casing 4. The ignition switch mechanism 13 is formed in a columnar shape, and designed to turn on and off the ignition switch in response to receiving a turning force around an axis of the ignition switch mechanism 13. This turning force is generated by transmitting the rotation or a turning force of the key cylinder 5 around an axis of the key cylinder 5 to the ignition switch mechanism 13.

In order to allow the ignition switch mechanism 13 to turn on and off the ignition switch in conjunction with the rotation of the key cylinder 5 having a rotational axis which is not aligned with the rotational axis of the ignition switch mechanism 13, the steering lock apparatus 1 is further provided with the following mechanism. Firstly, a first gear 8 coaxially supported by the first connection rod 7 and a second gear 11 engaged with the first gear 8 are provided between the first connection rod 7 and the cam 9. Each of the first and second gears is formed as a bevel gear having a tooth plane inclined, for example, at 45° relative to the rotational axis thereof. The second gear 11 is coaxially fixed to one end of a rotation shaft 12 serving as a second connection rod, and the other end of the second connection rod 12 is fixed to the ignition switch mechanism 13. In this way, the first and second gears 8, 11 or a bevel gear set interposed in a rotation-transmitting path extending from the key cylinder 5 to the ignition switch mechanism 13 allows a rotational movement to be transmitted between the first and second connection rods 7, 11 each having a rotational axis different in transmission direction. That is, through the bevel gear set, a transmission direction of the rotation is changed between the upstream and downstream sides of the bevel gear set.

Thus, the combination of the first gear 8, the second gear 11 and the second connection rod 12 serves as a rotation-transmitting mechanism for changing a transmission direction of the rotation of the key cylinder 5 from the axial direction of the key cylinder 5 to a given direction allowing the rotation of the key cylinder 5 to be transmitted to the ignition switch mechanism 13.

This rotation-transmitting mechanism can translate the steering lock apparatus 1 having the bent portion 27 into reality. Specifically, the rotation-transmitting mechanism makes it possible to arrange the steering lock apparatus 1 on one of the opposite lateral sides of the steering shaft 3 and adjust a height position of the steering lock apparatus 1 without being hindered by the steering shaft 3. Thus, the steering lock apparatus 1 can be disposed at a relatively upward position capable of being kept from protruding in a downward direction relative to the steering shaft 3, to a moderate degree or without causing deterioration in visibility of meters or the like.

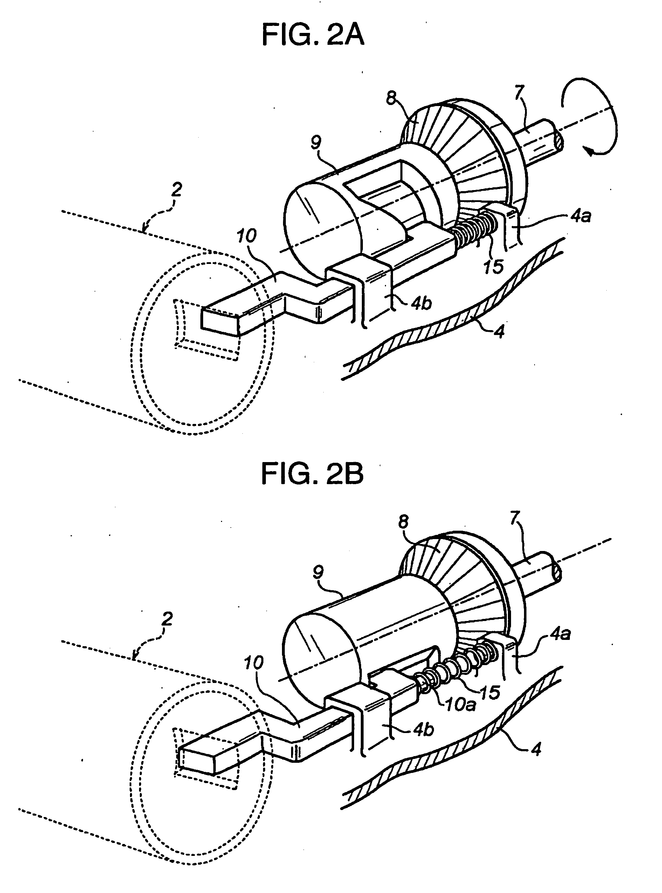

With reference to FIGS. 2A and 2B, a specific structure for locking and unlocking the steering shaft 3 in the above steering lock mechanism will be described below. FIGS. 2A and 2B are perspective views showing one illustrative structure of the steering lock mechanism, wherein FIG. 2A shows the state when the steering shaft is unlock or an unlock state, and FIG. 2B shows the state when the steering shaft is locked or a lock state.

As shown in FIGS. 2A and 2B, the cam 9 is formed as a cylindrical grooved cam having a cam groove. The lock member 10 is formed as a cam follower, for example, having a crank-like shape, and one end of the lock member 10 is engaged with the groove of the cam 9. Further, the lock member 10 is designed to be protruded and retracted along the axial direction of the cylindrical grooved cam 9 in conjunction with normal and reverse rotations of the cam 9, under the condition that the lock member 10 is constantly biased in a direction allowing the lock member 10 to be protruded from the casing 4 along an axial direction of the cylindrical grooved cam 9 by a coil spring 15. This coil spring 15 has one end fixed to a convex portion formed on an inner surface of the casing 4, and the other end fittingly attached onto a protrusion which is formed on a bent portion of the lock member 10 located adjacent to the end thereof engaged with the groove of the cam 9 to extend in a direction along the rotational axis of the cam 9. In FIG. 2A, the coil spring 15 is attached in a compressed state, and the lock member 10 is penetratingly inserted into a guide member 4b formed on the inner surface of the casing 4, so as to be moved only in the direction along the rotational axis of the cam 9. That is, the lock member 10 is biased toward an engagement position with the concave portion of the steering shaft 3 by the coil spring 15

FIG. 2A shows the unlock state after the key cylinder 5 is rotated toward an Ignition ON position by the key 5a to unlock the steering shaft. In the unlock state, according the guide of the groove of the cam 9, the lock member 10 is moved against the biasing force of the coil spring 15 in such a manner that an edge of the lock member 10 is retracted in the casing 4. Thus, the engagement between the edge of the lock member 10 and the concave portion of the steering shaft 3 is released to permit a rotating operation of the steering shaft 3. FIG. 2B shows the lock state after the key cylinder 5 is rotated toward an ACC OFF position by the key 5a to lock the steering shaft. When the unlock state in FIG. 2A is shifted to the lock state in FIG. 2B, the cam 9 is rotated together with the key cylinder 5 through the first connection rod 7. That is, the cam 9 is rotated in conjunction with the rotation of the key cylinder 5. Then, according to the action of the rotation of the cam 9, the lock member 10 biased toward the concave portion of the steering shaft 3 is moved in such a manner that the edge of the lock member 10 is protruded from the casing 4 and engaged with the concave portion of the steering shaft 3. Thus, the steering shaft 3 is locked to activate an antitheft function.

The structure for mounting the above steering lock apparatus 1 to the steering shaft housing 2 will be described in detail below.

In the structure of the steering lock apparatus 1 including the attaching structure, it is important to ensure a reliable antitheft function, and it is unacceptable to allow a tool or the like to be readily inserted into the structure. For this purpose, the casing 4 in this embodiment is designed to surround at least the steering lock mechanism, and the anchor portion for mounting the steering lock apparatus 1 to the steering shaft housing 2 is integrally formed with the casing 4.

Fundamentally, the anchor portion 20 has a first anchor portion 26 integrally formed with the main body 22, and a second anchor portion 21 adapted to clamp the steering shaft housing in cooperation with the first anchor portion 26. The first and second anchor portions 26, 21 is joined through two pairs of flanges 26a and 26a, 21a and 21a protruding in a radially outward direction of the clamped steering shaft housing 2 (or relative to the steering shaft 3) to allow the two pairs of flanges 26a and 26a, 21a and 21a to extend, respectively, in an upward direction and in a laterally outward direction relative to the steering shaft 3.

The first anchor portion 26 is formed in an arc shape along an outer periphery of the steering shaft housing 2. After the inner surface of the first anchor portion 26 is brought into contact with the outer periphery of the steering shaft housing 2, the second anchor portion 21 or a bracket formed in the same arc shape as that of the first anchor portion is joined and fixed to the first anchor portion 26 in such a manner as to clamp the steering shaft housing 2. This anchorage or fixing is performed in a fastening manner, for example, using bolts.

As mentioned above, the steering lock apparatus 1 disposed on one of the opposite lateral sides of the steering shaft 3. In this case, the joined portions of the flanges 26a and 26a, 21a and 21a in the first and second anchor portions 26, 21 are designed to extend in a direction other than a downward direction relative to the steering shaft 3, as described above. Considering only easiness of attachment to the steering shaft housing 2, it is advantageous that the joined portions are designed to extend in upward and downward directions relative to the steering shaft 3.

However, each of the flanges 26a and 26a, 21a and 21a inevitably has a convex shape due to the need for forming a bolt-hole therein. While a protruded length in each of the flanges 26a and 26a, 21a and 21a or convex portions is a relatively small value, it is preferable that this protrusion is designed to extend in a direction other than a downward direction relative to the steering shaft 2, so as to reliably avoid the interference between the flanges 26a and 26a, 21a and 21a and the knee of an occupant.

In view the above considerations, each of the flanges 26a and 26a, 21a and 21a of the first and second anchor portions 26, 21 of the casing 4 is preferably designed to extend in a direction other than a downward direction relative to the steering shaft 3. This makes it possible to eliminate any protrusion blow the steering shaft 3 so as to more effectively facilitate taking measures for ensuring an adequate occupant protection performance.

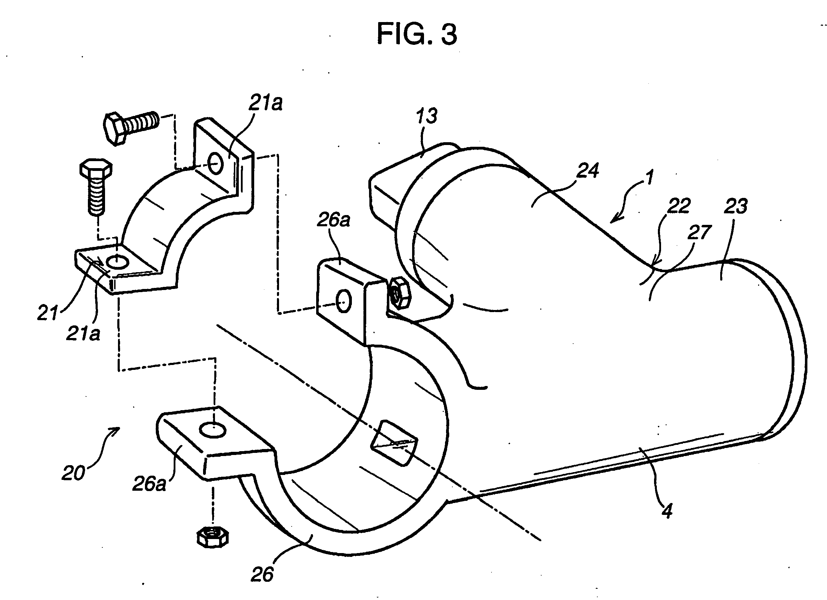

FIG. 3 shows a steering lock apparatus according a second embodiment of the present invention, wherein the joined portions between the first anchor portion 26 and the second anchor portion 21 or bracket of the casing 4 are designed to extend in a direction other than a downward direction relative to the steering shaft 3. In FIG 3, the reference numeral 26 indicates a first anchor portion to be mounted to the steering shaft housing 2 (not shown in FIG. 3) so as to support a main body 22, and the first anchor portion 26 is integrally formed with the casing 4. The reference numeral 21 indicates a second anchor portion to be joined to the first anchor portion 26. As mentioned above, two pairs of flanges 26a and 26a, 21a and 21a of the first and second anchor portions 26, 21 are fixedly fastened with bolts. In this illustrated embodiment, one of the two pairs of flanges 26a and 26a, 21a and 21a are designed to extend toward their edges in an upward direction relative to the steering shaft 3, and the other pair are designed to extend toward their edges in a laterally outward direction relative to the steering shaft 3 on the other lateral side of the steering shaft 3 opposite to the lateral side where the steering lock mechanism is disposed, or extend in a laterally outward direction relative to the steering shaft 3 on the other lateral side of the steering shaft 3 where no steering lock mechanism is disposed. This makes it possible to ensure the strength of the casing 4 and facilitate layout design associated with an operation for mounting the steering lock apparatus to the steering shaft housing.

If the flanges 26a and 26a, 21a and 21a of the first and second anchor portions 26, 21 of the casing 4 are designed to extend toward their edges in upward and downward directions relative to the steering shaft 3, the first and second anchor portions 26, 21 can be joined from both sides of the steering shaft 3 in such a manner as to clamp the steering shaft housing 2, and then the joined portion can be fixed or fastened. Differently from this case, when the flanges 26a and 26a, 21a and 21a are designed to extend toward their edges in an upward direction relative to the steering shaft 3 and in a laterally outward direction relative to the steering shaft 3 on the other lateral side of the steering shaft 3 where no steering lock mechanism is disposed, as shown in FIG. 3, the steering lock apparatus will be attached by inserting the steering shaft housing 2 in the state before a steering wheel is attached to a steering shaft 3, into the anchor portion 20 from a rear end (to which the steering wheel is attached) side of the steering shaft 3, and sliding the anchor portion 20 downward along the steering shaft housing 2.

Generally, in addition to the steering lock apparatus, another component, such as a combination switch unit, is also mounted to the steering shaft housing. The combination switch unit is typically mounted on the rearward side (on the side of the steering wheel) relative to the steering lock apparatus, and a mounting seat for mounting the combination switch unit is formed or attached in and to the steering shaft housing.

This causes a problem that the mounting seat for the combination switch unit hinders the steering shaft housing from being inserted into the anchor portion 20.

From this point of view, it is preferable to form the combination-switch-unit mounting seat in the casing 4.

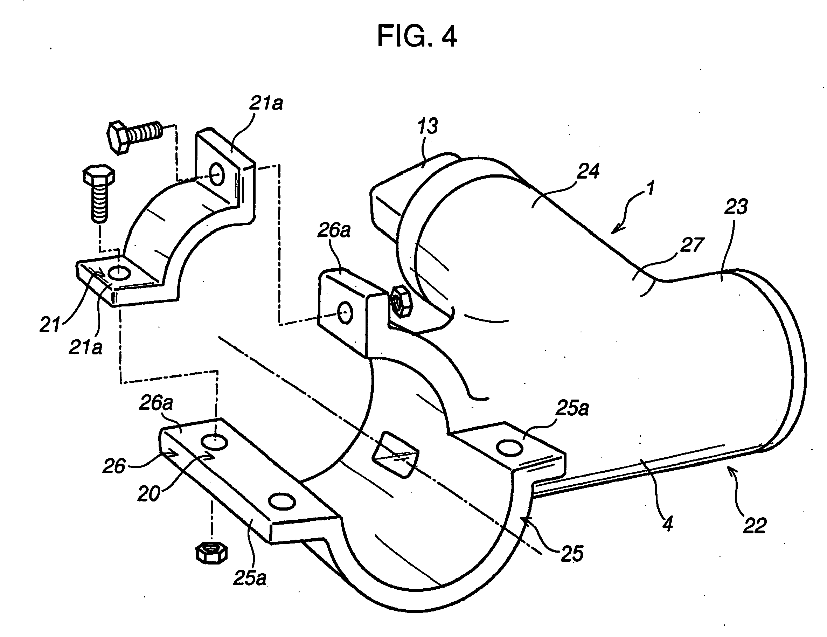

FIG. 4 shows a steering lock apparatus according to a second embodiment of the present invention, wherein the above combination-switch-unit mounting portion is formed in an anchor portion. Fundamentally, the combination-switch-unit mounting portion 25 is integrally formed with the first anchor portion 26 in a similar shape to the first anchor portion 26 to protrude from the first anchor portion 26 rearward or in the rearward direction of the vehicle (on the side of the steering wheel). This steering lock apparatus 1 having a casing 4 additionally serving as the combination-switch-unit mounting portion 25 can eliminate the need for forming or attaching the combination-switch-unit mounting seat to the steering shaft housing 2 in advance. Thus, this steering lock apparatus 1 can be readily attached by inserting the steering shaft housing 2 thereinto and sliding the steering lock apparatus 1 downward along the steering shaft housing 2.

Further, instead of forming the flange 25a in such a manner as to extend toward its edge in an upward direction relative to the steering shaft 3 as in the first anchor portion 26, the combination-switch-unit mounting portion 25 is preferably composed of two flanges formed, respectively, on right and left sides or opposite lateral sides of the steering shaft 3, as shown in FIG 4. This configuration of the combination-switch-unit mounting portion 25 makes it possible to mount a conventional combination switch unit without modifying a corresponding anchor portion thereof. That is, this combination-switch-unit mounting portion 25 serves as a mounting seat or bracket for the conventional combination switch unit. Thus, the mounting rigidity of the combination switch unit can be improved without excessive increase in cost.

Further, many of recent automobiles are equipped with a so-called keyless control system. In this system, communication for authentication is performed between a mobile or portable device serving as a key and an in-vehicle control unit (keyless control unit), and, if the authentication procedure is successively completed, a door lock and unlock control, an automatic engine start control or the like can be performed in a keyless manner. This system allows a series of vehicle operations to be performed without using a mechanical key.
This keyless control system includes a plurality of steps of communicating for authentication, releasing steering lock, and controllably permitting the operation of a key cylinder. Thus, the keyless control unit including a solenoid for operating a steering lock mechanism is typically mounted on a steering lock apparatus.

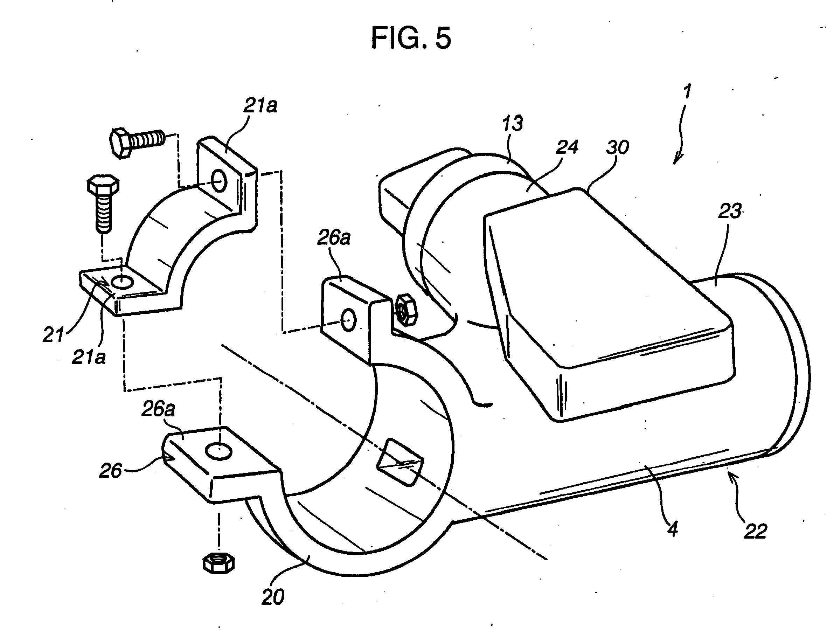

FIG. 5 shows a steering lock apparatus according to a third embodiment of the present invention, wherein a keyless control unit is mounted thereon. In this illustrated embodiment, the keyless control unit 30 is mounted on a top surface of the steering lock apparatus 1. If the keyless control unit 30 is mounted on a bottom surface of the steering lock apparatus 1, it is likely to cause the interference between the keyless control unit and knee or the like of an occupant in the event of a vehicle collision, and it is required to take measures for ensuring an adequate occupant protection performance. This leads to a problem about increase in cost. Thus, the keyless control unit is preferably mounted in such a manner as to be kept from protruding in a downward direction relative to the steering shaft 3.

The following description will be made about assembling of the components of the steering lock apparatuses 1 according to the above embodiments.

As described above, the steering lock apparatus has a distinctive feature where the intermediate portion of the casing is formed as the bent portion 27. Thus, in an assembling process of this apparatus, first of all, the components of the steering lock mechanism have to be installed in the intermediate portion. Referring to FIG. 1 again, it is preferable to use the proximal end portion of the casing 4 as an insertion hole for use in assembling the components of the steering lock mechanism. When the anchor portion 20 of the casing 4 has the aforementioned structure, or when the flanges 26a and 26a, 21a and 21a are designed to extend toward their edges in an upward direction relative to the steering shaft 3 and in a laterally outward direction relative to the steering shaft 3 on the other lateral side of the steering shaft 3 where no steering lock mechanism is disposed, an assembling operation for inserting the components of the steering lock mechanism from the side of the anchor portion has difficulties due to interference with the anchor portion 20. In contrast, it may be fully understood that an assembling operation from the side of the proximal end allows the components of the steering lock mechanism to be inserted straight so as to facilitate the assembling.

The aforementioned steering lock apparatuses have been shown and described as illustrative embodiments of the present invention, and changes and modifications may be appropriately made therein without departing from the spirit and scope of the invention. Some modifications will be described below.
(1) The specific structure of the anchor portion 20 in the steering lock apparatuses of the present invention is not limited to those in the above embodiments. Specifically, while the anchor portion in the above embodiments is split at upper and lateral positions, and formed as the first and second anchor portions 26, 21, the split positions of the first and second anchor portions 26, 21 are not limited to those in the above embodiments. For example, the anchor portion 20 may be split vertically relative to the steering shaft 3 to form first and second anchor portions.
   In this case, flanges to be formed in each of the split portions may be designed not only to extend in a radially outward direction relative to the steering shaft 3, but also to extend obliquely at a given angle (e.g. 45 degrees) with respect to the radially outward direction. When the flange, particularly the flange disposed below the steering shaft 3, is designed to extend obliquely at a given angle with respect to a radially outward direction relative to the steering shaft 3 in the above manner, a distance between edges of the flanges can be reduced. This makes it possible to form an anchor portion with a reduced size and reduce a downward protruded length of the flange.
(2) Each of the direction and angle of bending in the bent portion 27 of the casing 4 is not limited to a specific value, but may be set at an appropriate value to the extent capable of avoiding the interference with an in-vehicle member disposed around the steering shaft 3. Specifically, while the proximal end portion 23 of the casing 4 in the above embodiment is disposed to have an axis slightly inclined rearward with respect to a width or lateral direction of the vehicle, and the distal end portion of the casing 4 is disposed to extend frontward or in the frontward direction of the vehicle, the distal end portion of the casing 4 may be designed to extend upward.
(3) The steering lock apparatus having the keyless control unit mounted on the main body of the casing 4 as shown in FIG. 5 may additionally have the combination-switch-unit mounting portion as shown in FIG. 4.

As described above, an inventive steering lock apparatus comprises a key cylinder adapted to be rotated by a key, a steering lock mechanism adapted to selectively lock and unlock a steering shaft extending in an approximately frontward and rearward direction of a vehicle, in conjunction with the rotation of the key cylinder, an ignition switch mechanism adapted to selectively turn on and off an ignition switch in conjunction with the rotation of the key cylinder, and a casing for housing therein the key cylinder, the steering lock mechanism and the ignition switch mechanism.

The conventional steering lock apparatus as disclosed in the aforementioned Japanese Patent Laid-Open Publications is disposed in such a manner as to intersect with a steering shaft extending in an approximately frontward and rearward direction of a vehicle, in top plan view or when viewed from above or below.

In contrast, the steering lock apparatus is designed such that the casing housing therein the key cylinder, the steering lock mechanism and the ignition switch mechanism is disposed on one of opposite lateral sides of the steering shaft. Further, in this steering lock apparatus, the casing has an intermediate portion which is bent and formed as a bent portion. The key cylinder and the ignition switch mechanism are disposed, respectively, on opposite sides of the bent portion while interposing the bent portion therebetween, and the bent portion houses therein a rotation-transmitting mechanism for changing a transmission direction of the rotation of the key cylinder from an axial direction of the key cylinder to a given direction allowing the rotation of the key cylinder to be transmitted to the ignition switch mechanism.

The casing for housing therein the key cylinder, the steering lock mechanism and the ignition switch mechanism is disposed on one of the opposite lateral sides of the steering shaft. Thus, the steering lock apparatus can be disposed at a desired height position without interference with the steering shaft. Specifically, the steering lock apparatus can be disposed adequately at a relatively upward position capable of being kept from protruding in a downward direction relative to the steering shaft, so as to facilitate taking measures for ensuring an adequate occupant protection performance. In addition, original functions of the ignition switch mechanism and the steering lock mechanism can be reliably achieved in full measure.

In the steering lock apparatus, the bent portion may be bent at an approximately right angle.

Further, the casing may have a main body including the bent portion and surrounding the steering lock mechanism, and an anchor portion for mounting the main body to a steering shaft housing supporting the steering shaft internally and rotatably. This anchor portion may include a first anchor portion integrally formed with the main body, and a second anchor portion adapted to be joined to the first anchor portion so as to clamp the steering shaft housing in cooperation with the first anchor portion. Each of the first and second anchor portions may be formed with a flange which protrudes in a radially outward direction relative to the steering shaft to allow the first and second anchor portions to be joined together therethrough. The flange may be designed to extend in a direction other than a downward direction relative to the steering shaft.

The above structure makes it possible to prevent the flanges of the first and second anchor portions from protruding in a downward direction relative to the steering shaft so as to further facilitate taking measures for ensuring an adequate occupant protection performance.

Further, each of the first and second anchor portions may be formed with two of the flanges which are designed to extend, respectively, in an upward direction relative to the steering shaft and in an approximately laterally outward direction relative to the other lateral side of the steering shaft opposite to the lateral side where the steering lock mechanism is disposed.

This makes it possible to ensure the strength of the casing and facilitate layout design associated with an operation for mounting the steering lock apparatus to the steering shaft housing.

In this case, the casing may be formed with a combination-switch-unit mounting portion for mounting a combination switch unit thereto.

When the two flanges are designed to extend, respectively, in an upward direction relative to the steering shaft and in an approximately laterally outward direction relative to the other lateral side of the steering shaft opposite to the lateral side where the steering lock mechanism is disposed, the two flanges cannot be disposed in opposed relation to one another at an angle of 180° therebetween. Thus, in an operation for mounting the casing to the steering shaft housing, the casing has to be attached by inserting the steering shaft housing into the anchor portion (first anchor portion) thereof and sliding the casing along the steering shaft housing. The above structure can eliminate the need for forming or attaching a combination-switch-unit anchor portion in and to the steering shaft housing to remove obstructions in the operation for inserting the steering shaft housing into the anchor portion of the casing and sliding the casing along the steering shaft housing.

Further, the combination-switch-unit mounting portion may include a combination-switch-unit bracket located rearward relative to the anchor portion and formed on each of the opposite lateral sides of the steering shaft.

This makes it possible to provide enhanced mounting rigidity of a combination switch unit without excessive increase in cost.

Further, the steering lock mechanism may be housed in the casing in such a manner as to be coaxially aligned with the key cylinder, and the casing may have a proximal end formed with an insertion hole for allowing the steering lock mechanism and the key cylinder to be inserted into the casing therethrough.

This makes it possible to install the steering lock mechanism from the side of the proximal end portion of the casing so as to provide enhanced assembling performance and seal the casing by the key cylinder to prevent the steering lock mechanism from being exposed to outside.

In the steering lock apparatus, the casing may have a main body including the bent portion and surrounding the steering lock mechanism, an anchor portion for mounting the main body to a steering shaft housing supporting the steering shaft internally and rotatably, and a combination-switch-unit mounting portion for mounting a combination switch unit thereto.

In this case, the combination-switch-unit mounting portion for mounting a combination switch unit thereto is formed in the casing in addition to the anchor portion. This makes it possible to reduce the number of components and provide enhanced assembling performance.

The steering lock apparatus may include a keyless lock unit connected to the key cylinder and adapted to rotate the key cylinder without using the key. The keyless lock unit may be disposed in such a manner as to be kept from protruding in a downward direction relative to the steering shaft.

This makes it possible to prevent the keyless control unit from protruding in a downward direction relative to the steering shaft so as to facilitate taking measures for ensuring an adequate occupant protection performance.

In the steering lock apparatus, the bent portion may be formed to allow a distal end portion of the casing for housing the ignition switch mechanism therein to extend frontward.

In this case, the bent portion is bent in a direction other than a downward direction relative to the steering shaft. Thus, the risk of interference between the ignition switch mechanism and the knee of an occupant can be more effectively avoided. Further, the bent portion is bent in a direction other than an upward direction relative to the steering shaft. This makes it possible to eliminate the risk of interference between the ignition switch mechanism and meters in an instrument panel or the like to maintain adequate visibility of the meters. In addition, the ignition switch mechanism is oriented in a frontward direction which is equal to a direction for connecting wirings thereof with an in-vehicle battery and other associated in-vehicle electric components. Thus, the ignition switch mechanism 13 can be disposed closer to the in-vehicle battery and other associated in-vehicle electric components to facilitate reduction in length of the wirings.

Also, another inventive steering lock apparatus comprises a key cylinder adapted to be rotated by a key, a steering lock mechanism adapted to selectively lock and unlock a steering shaft extending in an approximately frontward and rearward direction of a vehicle, in conjunction with the rotation of the key cylinder, an ignition switch mechanism adapted to selectively turn on and off an ignition switch in conjunction with the rotation of the key cylinder, and a casing for housing therein the key cylinder, the steering lock mechanism and the ignition switch mechanism. The casing is disposed on one of opposite lateral sides of the steering shaft, and the casing has an intermediate portion formed as a bent portion which is bent at an approximately right angle to allow a distal end portion thereof to extend frontward. The ignition key mechanism is housed in the distal end portion, and the key cylinder is housed in a proximal end portion of the casing located on the opposite side of the distal end portion across the bent portion. The bent portion houses therein a rotation-transmitting mechanism for changing a transmission direction of the rotation of the key cylinder from an axial direction of the key cylinder to a given direction allowing the rotation of the key cylinder to be transmitted to the ignition switch mechanism.

Further, an another inventive steering lock apparatus comprises a key cylinder adapted to be rotated by a key, a steering lock mechanism adapted to selectively lock and unlock a steering shaft extending in an approximately frontward and rearward direction of a vehicle, in conjunction with the rotation of the key cylinder, an ignition switch mechanism adapted to selectively turn on and off an ignition switch in conjunction with the rotation of the key cylinder, and a casing for housing therein the key cylinder, the steering lock mechanism and the ignition switch mechanism. The casing is disposed on one of opposite lateral sides of the steering shaft, the casing having an intermediate portion formed as a bent portion which is bent at an approximately right angle to allow a distal end portion thereof to extend frontward. The ignition key mechanism is housed in the distal end portion, and the key cylinder is housed in a proximal end portion of the casing located on the opposite side of the distal end portion across the bent portion. The bent portion houses therein a rotation-transmitting mechanism for changing a transmission direction of the rotation of the key cylinder from an axial direction of the key cylinder to a given direction allowing the rotation of the key cylinder to be transmitted to the ignition switch mechanism. The casing is provided with a keyless lock unit connected to the key cylinder and adapted to rotate the key cylinder without using the mechanical key, the keyless lock unit being disposed in such a manner as to be kept from protruding in a downward direction relative to the steering shaft.

An inventive steering lock apparatus can be disposed at a relatively upper position to prevent the steering lock apparatus from protruding in a downward direction relative to a steering shaft so as to facilitate taking measures for ensuring an adequate occupant protection performance without excessive increase in cost.

## Claims

1. A steering lock apparatus comprising:
a key cylinder (5) adapted to be rotated by a key;
a steering lock mechanism (9, 10) adapted to selectively lock and unlock a steering shaft (3) extending in an approximately frontward/rearward direction of a vehicle, in conjunction with the rotation of said key cylinder (5);
an ignition switch mechanism (13) adapted to selectively turn on and off an ignition switch in conjunction with the rotation of said key cylinder (5); and
a casing (4) for housing therein said key cylinder (5), said steering lock mechanism (9, 10) and said ignition switch mechanism (13),
wherein:
said casing (4), which is disposed on one of opposite lateral sides of said steering shaft (3), has a main body including an intermediate portion which is bent and formed as a bent portion (27) and surrounding said steering lock mechanism (9, 10), and an anchor portion (26, 21) for mounting said main body (22) to a steering shaft housing (2) supporting the steering shaft (3) internally and rotatably,
said key cylinder (5) and said ignition switch mechanism (13) are disposed, respectively, on opposite sides of said bent portion (27) while interposing said bent portion (27) therebetween; and
said bent portion (27) houses therein a rotation-transmitting mechanism (8, 11, 12) for changing a transmission direction of the rotation of said key cylinder (5) from an axial direction of said key cylinder (5) to a given direction allowing the rotation of said key cylinder (5) to be transmitted to said ignition switch mechanism (13);
**characterized in that**
said anchor portion (26, 21) including a first anchor portion (26) integrally formed with said main body (22), and a second anchor portion (21) adapted to be joined to said first anchor portion (26) so as to clamp said steering shaft housing (2) in cooperation with said first anchor portion (26), each of said first and second anchor portions (26, 21) being formed with a flange (26a, 21 a) which protrudes in a radially outward direction relative to the steering shaft (3) to allow said first and second anchor portions (26, 21) to be joined together therethrough, said flanges (26a, 21a) being designed to extend in a direction other than a downward direction relative to the steering shaft (3) in such a way that all flanges (26a, 21a) avoid interference with the knee of an occupant.

2. The steering lock apparatus as defined in claim 1, wherein each of said first and second anchor portions (26, 21) is formed with two of said flanges(26a, 21a) which are designed to extend, respectively, in an upward direction relative to the steering shaft (3) and in an approximately laterally outward direction relative to the other lateral side of the steering shaft (3) opposite to said lateral side where said steering lock mechanism (9, 10) is disposed.

3. The steering lock apparatus as defined in claim 1 or 2, wherein said casing (4) is formed with a combination-switch-unit mounting portion for mounting a combination switch unit thereto.

4. The steering lock apparatus as defined in claim 3, wherein said combination-switch-unit mounting portion includes a combination-switch-unit bracket located rearward relative to said anchor portion (26, 21) and formed on each of the opposite lateral sides of said steering shaft (3).

5. The steering lock apparatus as defined in any of claims 2 to 4, wherein:
said steering lock mechanism (9, 10) is housed in said casing (4) in such a manner as to be coaxially aligned with said key cylinder (5); and
said casing (4) has a proximal end formed with an insertion hole for allowing said steering lock mechanism (9, 10) and said key cylinder (5) to be inserted into said casing (4) therethrough.

6. The steering lock apparatus as defined in one of the preceding claims, wherein said casing (4) has a main body (22) including said bent portion (27) and surrounding said steering lock mechanism (9, 10), an anchor portion (26) for mounting said main body (22) to a steering shaft housing (2) supporting the steering shaft (3) internally and rotatably, and a combination-switch-unit mounting portion for mounting a combination switch unit thereto.

7. The steering lock apparatus as defined in one of the preceding claims, which includes a keyless lock unit connected to said key cylinder (5) and adapted to rotate said key cylinder (5) without using said key, said keyless lock unit being disposed in such a manner as to be kept from protruding in a downward direction relative to said steering shaft (3).

8. The steering lock apparatus as defined in one of the preceding claims, wherein said bent portion (27) is formed to allow a distal end portion of said casing (4) housing said ignition switch mechanism (13) therein to extend frontward.

## Patentansprüche

1. Lenksperrenvorrichtung, umfassend:
einen Schlüsselzylinder (5), der dafür ausgelegt ist, von einem Schlüssel gedreht zu werden;
einen Lenksperrenmechanismus (9, 10), der dafür ausgelegt ist, eine Lenkwelle (3), die sich ungefähr in einer Vorwärts-Rückwärts-Richtung eines Fahrzeuges erstreckt, im Zusammenspiel mit der Drehung des Schlüsselzylinders (5) selektiv zu sperren und zu entsperren;
einen Zündschaltermechanismus (13), der dafür ausgelegt ist, einen Zündschalter im Zusammenspiel mit der Drehung des Schlüsselzylinders (5) selektiv an- und abzuschalten; und
ein Gehäuse (4), in dem der Schlüsselzylinder (5), der Lenksperrenmechanismus (9, 10) und der Zündschaltermechanismus (13) untergebracht sind,
wobei:
das an einer der entgegengesetzten bzw. gegenüberliegenden seitlichen Seiten der Lenkwelle (3) angeordnete Gehäuse (4) einen Hauptkörper, der einen Zwischenabschnitt enthält, der gewinkelt bzw. gebogen ist, als gewinkelter bzw. gebogener Abschnitt (27) ausgebildet ist und den Lenksperrenmechanismus (9, 10) umgibt, und einen Verankerungsabschnitt (26, 21) zum Anbringen des Hauptkörpers (22) an einer Lenkwellenunterbringung bzw. -gehäuse (2), die die Lenkwelle (3) intern und drehbar stützt, aufweist,
der Schlüsselzylinder (5) und der Zündschaltermechanismus (13) jeweils an entgegengesetzten bzw. gegenüberliegenden Seiten des gewinkelten Abschnittes (27) angeordnet sind und der gewinkelte Abschnitt (27) zwischen diesen angeordnet ist; und
der gewinkelte Abschnitt (27) einen Drehungsübertragungsmechanismus (8, 11, 12) in sich unterbringt zum Ändern einer Übertragungsrichtung der Drehung des Schlüsselzylinders (5) von einer axialen Richtung des Schlüsselzylinders (5) in eine gegebene Richtung, was eine Übertragung der Drehung des Schlüsselzylinders (5) auf den Zündschaltermechanismus (13) ermöglicht;
**dadurch gekennzeichnet, dass**
der Verankerungsabschnitt (26, 21) einen ersten Verankerungsabschnitt (26), der integral mit dem Hauptkörper (22) ausgebildet ist, und einen zweiten Verankerungsabschnitt (21), der dafür ausgelegt ist, mit dem ersten Verankerungsabschnitt (26) derart verbunden zu werden, dass die Lenkwellenunterbringung (2) in Zusammenwirkung mit dem ersten Verankerungsabschnitt (26) geklemmt bzw. festgeklemmt wird, aufweist,
jeder von den ersten und zweiten Verankerungsabschnitten (26, 21) mit einem Flansch (26a, 21a) ausgebildet ist, der in einer radial nach außen weisenden Richtung relativ zu der Lenkwelle (3) vorsteht, um hierdurch ein Zusammenfügen bzw. wechselseitiges Verbinden der ersten und zweiten Verankerungsabschnitte (26, 21) zu ermöglichen, wobei die Flansche (26a, 21 a) derart ausgestaltet sind, dass sie sich in einer Richtung ungleich einer Abwärtsrichtung relativ zu der Lenkwelle (3) derart erstrecken, dass sämtliche Flansche (26a, 21 a) eine störende Wechselwirkung mit dem Knie eines Insassen von unterhalb der Lenkwelle (3) her vermeiden.

2. Lenksperrenvorrichtung nach Anspruch 1, bei der jeder von den ersten und zweiten Verankerungsabschnitten (26, 21) mit zweien der Flansche (26a, 21 a) ausgebildet ist, die derart ausgestaltet sind, dass sie sich jeweils in einer Aufwärtsrichtung relativ zu der Lenkwelle (3) und in einer ungefähr seitlich nach außen weisenden Richtung relativ zu der anderen seitlichen Seite der Lenkwelle (3) entgegengesetzt bzw. gegenüberliegt zu derjenigen seitlichen Seite, an der der Lenksperrenmechanismus (9, 10) angeordnet ist, erstrecken.

3. Lenksperrenvorrichtung nach Anspruch 1 oder 2, bei der das Gehäuse (4) mit einem Kombinationsschaltereinheitsanbringabschnitt zum daran erfolgenden Anbringen einer Kombinationsschaltereinheit ausgebildet ist.

4. Lenksperrenvorrichtung nach Anspruch 3, bei der der Kombinationsschaltereinheitsanbringabschnitt einen Kombinationsschaltereinheitsbügel bzw. - klammer bzw. -träger enthält, der rückwärtig relativ zu dem Verankerungsabschnitt (26, 21) angeordnet und an jeder der entgegengesetzten bzw. gegenüberliegenden seitlichen Seiten der Lenkwelle (3) ausgebildet ist.

5. Lenksperrenvorrichtung nach einem der Ansprüche 2 bis 4, bei der:
der Lenksperrenmechanismus (9, 10) derart in dem Gehäuse (4) untergebracht ist, dass er koaxial mit dem Schlüsselzylinder (5) ausgerichtet ist; und
das Gehäuse (4) ein proximales Ende aufweist, das mit einem Einführloch ausgebildet ist, das ein hierdurch erfolgendes Einführen des Lenksperrenmechanismus (9, 10) und des Schlüsselzylinders (5) in das Gehäuse (4) ermöglicht.

6. Lenksperrenvorrichtung nach einem der vorhergehenden Ansprüche, bei der das Gehäuse (4) einen Hauptkörper (22), der den gewinkelten Abschnitt (27) enthält und den Lenksperrenmechanismus (9, 10) umgibt bzw. aufweist, einen Verankerungsabschnitt (26) zum Anbringen des Hauptkörpers (22) an einer Lenkwellenunterbringung (2), die die Lenkwelle (3) intern und drehbar stützt, und einen Kombinationsschaltereinheitsanbringabschnitt zum daran erfolgenden Anbringen einer Kombinationsschaltereinheit aufweist.

7. Lenksperrenvorrichtung nach einem der vorhergehenden Ansprüche, die eine schlüssellose Sperreinheit, die mit dem Schlüsselzylinder (5) verbunden und dafür ausgelegt ist, den Schlüsselzylinder (5) ohne Verwendung eines Schlüssels zu drehen, aufweist, wobei die schlüssellose Sperreinheit derart angeordnet ist, dass sie von einem Vorstehen in eine Abwärtsrichtung relativ zu der Lenkwelle (3) gehalten wird.

8. Lenksperrenvorrichtung nach einem der vorhergehenden Ansprüche, bei der der gewinkelte Abschnitt (27) derart ausgebildet ist, dass sich ein distaler Endabschnitt des Gehäuses (4), in dem der Zündschaltermechanismus (13) untergebracht ist, nach vorne erstrecken kann.

## Revendications

1. Appareil de verrouillage de direction, comprenant :
un cylindre de clé (5) adapté pour être tourné par une clé ;
un mécanisme de verrouillage de direction (9, 10) adapté pour verrouiller et déverrouiller sélectivement un arbre de direction (3) s'étendant dans une direction approximativement vers l'avant/l'arrière d'un véhicule, conjointement avec la rotation dudit cylindre de clé (5) ;
un mécanisme à contacteur d'allumage (13) adapté pour établir ou couper sélectivement le contact d'un contacteur d'allumage, conjointement avec la rotation dudit cylindre de clé (5) ; et
un boîtier (4) pour loger dedans ledit cylindre de clé (5), ledit mécanisme de verrouillage de direction (9, 10) et ledit mécanisme à contacteur d'allumage (13), dans lequel :
ledit boîtier (4) qui est agencé sur un des côtés latéraux opposés dudit arbre de direction (3) a un corps principal incluant une partie intermédiaire qui est courbée et formée comme une partie courbée (27) et entourant ledit mécanisme de verrouillage de direction (9, 10), ainsi qu'une partie d'ancrage (26, 21) pour le montage dudit corps principal (22) sur un logement d'arbre de direction (2) soutenant l'arbre de direction (3) intérieurement et en rotation ;
ledit cylindre de clé (5) et ledit mécanisme à contacteur d'allumage (13) sont agencés respectivement sur des côtés opposés de ladite partie courbée (27) tout en interposant ladite partie courbée (27) entre eux ; et
ladite partie courbée (27) loge dedans un mécanisme de transmission de rotation (8, 11, 12) afin de changer une direction de transmission de la rotation dudit cylindre de clé (5) depuis une direction axiale dudit cylindre de clé (5) vers une direction donnée permettant à la rotation dudit cylindre de clé (5) d'être transmise sur ledit mécanisme à contacteur d'allumage (13) ;
**caractérisé en ce que** :
ladite partie d'ancrage (26, 21) incluant une première partie d'ancrage (26) formée en un seul tenant avec ledit corps principal (22), et une seconde partie d'ancrage (21) adaptée pour être reliée à ladite première partie d'ancrage (26) de manière à fixer ledit logement d'arbre de direction (2) en coopération avec ladite première partie d'ancrage (26), chacune parmi ladite première et ladite seconde partie d'ancrage (26, 21) étant formée avec une bride (26a, 21a) qui fait saillie dans une direction radialement extérieure par rapport à l'arbre de direction (3) afin de permettre à ladite première et à ladite seconde partie d'ancrage (26, 21) d'être assemblées l'une à l'autre par l'intermédiaire de celle-ci, lesdites brides (26a, 21a) étant conçues pour s'étendre dans une direction autre qu'une direction vers le bas par rapport à l'arbre de direction (3) d'une manière telle que toutes les brides (26a, 21a) évitent une perturbation avec le genou d'un occupant depuis le dessous de l'arbre de direction (3).

2. Appareil de verrouillage de direction selon la revendication 1, dans lequel chacune parmi ladite première et ladite seconde partie d'ancrage (26, 21) est formée avec deux desdites brides (26a, 21a) qui sont conçues pour s'étendre respectivement dans une direction vers le haut par rapport à l'arbre de direction (3) et approximativement dans une direction latéralement vers l'extérieur par rapport à l'autre côté latéral de l'arbre de direction (3) opposé audit côté latéral où est agencé ledit mécanisme de verrouillage de direction (9, 10).

3. Appareil de verrouillage de direction selon l'une ou l'autre des revendications 1 et 2, dans lequel ledit boîtier (4) est formé d'une partie de montage d'unité de commutation combinée pour le montage d'une unité de commutation combinée sur celui-ci.

4. Appareil de verrouillage de direction selon la revendication 3, dans lequel ladite partie de montage d'unité de commutation combinée inclut un support d'unité de commutation combinée placé à l'arrière par rapport à ladite partie d'ancrage (26, 21) et formé sur chacun des côtés latéraux opposés dudit arbre de direction (3).

5. Appareil de verrouillage de direction selon l'une quelconque des revendications 2 à 4, dans lequel :
ledit mécanisme de verrouillage de direction (9, 10) est logé dans ledit boîtier (4) de manière à être aligné coaxialement avec ledit cylindre de clé (5) ; et
ledit boîtier (4) a une extrémité proximale formée avec un trou d'insertion pour permettre audit mécanisme de verrouillage de direction (9, 10) et audit cylindre de clé (5) d'être insérés dans ledit boîtier (4) à travers celle-ci.

6. Appareil de verrouillage de direction selon l'une des revendications précédentes, dans lequel ledit boîtier (4) a un corps principal (22) incluant ladite partie courbée (27) et entourant ledit mécanisme de verrouillage de direction (9, 10), une partie d'ancrage (26) pour le montage dudit corps principal (22) sur un logement d'arbre de direction (2) soutenant l'arbre de direction (3) intérieurement et en rotation, et une partie de montage d'unité de commutation combinée pour le montage d'une unité de commutation combinée sur celui-ci.

7. Appareil de verrouillage de direction selon l'une des revendications précédentes, lequel inclut une unité de verrouillage sans clé connectée audit cylindre de clé (5) et adaptée pour tourner ledit cylindre de clé (5) sans utiliser ladite clé, ladite unité de verrouillage sans clé étant agencée de manière à être empêchée de faire saillie dans une direction vers le bas par rapport audit arbre de direction (3).

8. Appareil de verrouillage de direction selon l'une des revendications précédentes, dans lequel ladite partie courbée (27) est formée pour permettre à une partie terminale distale dudit boîtier (4), logeant dedans ledit mécanisme à contacteur d'allumage (13), de s'étendre vers l'avant.
